# EUROPEAN PATENT APPLICATION

(11) **EP 4 549 951 A1**
(43) Date of publication of application: **07.05.2025**
(21) Application number: 23830837.3
(22) Date of filing: 09.05.2023
(51) Int. Cl.: G01N 35/02

(54) **SAMPLE LIFTING/LOWERING MECHANISM AND SAMPLE CONVEYING DEVICE**

(30) Priority: 29.06.2022 JP 2022104442
(71) Applicant: HITACHI HIGH-TECH CORPORATION, Tokyo 105-6409 (JP)
(72) Inventor: MIYAMOTO Kazuaki, Tokyo 105-6409 (JP); TAMURA Kazuma, Tokyo 105-6409 (JP); WATANABE Hiroshi, Tokyo 105-6409 (JP)
(74) Representative: Strehl & Partner mbB
(86) International application number: PCT/JP2023/017478
(87) International publication number: WO 2024/004385

(57) **Abstract**

The purpose of the present invention is to provide a sample lifting/lowering mechanism and a sample conveying device able to transport a sample holder without tipping over the sample holder. In order to achieve said purpose, a sample lifting/lowering mechanism of the present invention comprises a sample holder carrying part for carrying the sample holder and able to rotate around a rotary shaft, and which lifts, lowers, and transports the sample holder loaded on the sample holder carrying part, wherein an operation in which the sample holder carrying part rotates around the rotary shaft is initiated after an operation in which the rotary shaft lifts or lowers is completed. Additionally, this sample conveying device comprises: a first conveying line that conveys the sample holder; a second conveying line that is provided above or below the first conveying line and conveys the sample holder; and the sample lifting/lowering mechanism that, when the sample holder conveyed by the first conveying line has been loaded, lifts or lowers the sample holder and transports the sample holder to the second conveying line.

## Description

### Technical Field

The present invention relates to a sample lifting and lowering mechanism and a sample conveying device.

### Background Art

In a system for inspecting a sample, a plurality of conveyance lines for conveying the sample are provided in addition to an analyzer. In particular, when the conveyance lines are provided vertically, a mechanism for lifting and lowering the sample from one conveyance line to the other conveyance line is required.

Here, for example, PTL 1 is known as a technique for eliminating a need for a drive source dedicated to delivery when an article is carried in or carried out between a conveyance mechanism and a conveyance line unless a conveyance target is limited to the sample. PTL 1 discloses that, when a loading unit (lifting and lowering roller base) of an article (pallet) lifts and lowers, and comes into contact with a stopper at a predetermined height, the loading unit rotates around a fulcrum provided on a bottom surface of the loading unit as a shaft, and the article is carried-out by an own weight thereof due to an inclination of the loading unit.

### Citation List

### Patent Literature

PTL 1: JPH04-260523A

### Summary of Invention

### Technical Problem

In the technique disclosed in PTL 1, when the loading unit rotates in order to carry out the article, the fulcrum serving as a rotary shaft of the loading unit lifts or lowers. That is, since the rotation operation of the loading unit and a vertical movement operation of the rotary shaft proceed in parallel, there is a possibility that a positional relationship between the loading unit and the (carry-out destination) conveyance line is deviated depending on a timing when the article is carried out. In particular, when the conveyance target is a relatively small sample holder, there is a possibility that the sample holder may tip over even with a slight positional deviation.

An object of the invention is to provide a sample lifting and lowering mechanism and a sample conveying device that are capable of carrying out a sample holder without tipping over the sample holder.

### Solution to Problem

In order to achieve said purpose, a sample lifting and lowering mechanism according to the invention includes a sample holder loading unit configured to load a sample holder and to be rotatable around a rotary shaft. The sample lifting and lowering mechanism lifts, lowers, and carries-out the carried-in sample holder to the sample holder loading unit, and an operation in which the sample holder loading unit rotates around the rotary shaft is started after an operation in which the rotary shaft lifts or lowers is completed. In addition, a sample conveying device according to the invention includes: a first conveyance line configured to convey a sample holder; a second conveyance line provided above or below the first conveyance line and configured to convey the sample holder; and the sample lifting and lowering mechanism configured to, when the sample holder conveyed by the first conveyance line is carried-in, lift and lower the sample holder and carry-out the sample holder to the second conveyance line.

### Advantageous Effects of Invention

According to the invention, it is possible to provide a sample lifting and lowering mechanism and a sample conveying device that capable of carrying out a sample holder without tipping over the sample holder.

### Brief Description of Drawings

[FIG. 1] FIG. 1 is a top view showing a configuration of a sample inspection system according to an embodiment of the invention.
[FIG. 2] FIG. 2 is a side view showing a state before a sample holder is carried in in a sample conveying device according to Embodiment 1.
[FIG. 3] FIG. 3 is a side view showing a state immediately after the sample holder is carried in in the sample conveying device according to Embodiment 1.
[FIG. 4] FIG. 4 is a side view showing a state immediately after a drive base lifts and a contactor is in contact with a loading base in the sample conveying device according to Embodiment 1.
[FIG. 5] FIG. 5 is a side view showing a state immediately after the drive base further lifts and the following base is in contact with an upper stopper in the sample conveying device according to Embodiment 1.
[FIG. 6] FIG. 6 is a side view showing a state immediately after the drive base further lifts and reaches a carry-out position in the sample conveying device according to Embodiment 1.
[FIG. 7] FIG. 7 is a side view showing a state immediately after the sample holder is carried out in the sample conveying device according to Embodiment 1.
[FIG. 8] FIG. 8 is a side view showing a state immediately before the drive base lowers and the following base is separated from the upper stopper in the sample conveying device according to Embodiment 1.
[FIG. 9] FIG. 9 is a side view showing a state immediately after the drive base further lowers and the following base is in contact with a lower stopper in the sample conveying device according to Embodiment 1.
[FIG. 10] FIG. 10 is a side view showing a state where the drive base further lowers and reaches an initial position in the sample conveying device according to Embodiment 1.
[FIG. 11] FIG. 11 is a side view showing a state before a sample holder is carried in in a sample conveying device according to Embodiment 2.
[FIG. 12] FIG. 12 is a side view showing a state immediately after the sample holder is carried in in the sample conveying device according to Embodiment 2.
[FIG. 13] FIG. 13 is a side view showing a state immediately after the drive base lowers and a contactor is in contact with a sample holder loading unit in the sample conveying device according to Embodiment 2.
[FIG. 14] FIG. 14 is a side view showing a state immediately after the drive base further lowers and the following base is in contact with a lower stopper in the sample conveying device according to Embodiment 2.
[FIG. 15] FIG. 15 is a side view showing a state immediately after the drive base further lowers and reaches a carry-out position in the sample conveying device according to Embodiment 2.
[FIG. 16] FIG. 16 is a side view showing a state immediately after the sample holder is carried out in the sample conveying device according to Embodiment 2.
[FIG. 17] FIG. 17 is a side view showing a state immediately before the drive base lifts and the following base is separated from the lower stopper in the sample conveying device according to Embodiment 2.
[FIG. 18] FIG. 18 is a side view showing a state immediately after the drive base further lifts and the following base is in contact with an upper stopper in the sample conveying device according to Embodiment 2.
[FIG. 19] FIG. 19 is a side view showing a state where the drive base further lifts and reaches an initial position in the sample conveying device according to Embodiment 2.

### Description of Embodiments

Hereinafter, embodiments of the invention will be described with reference to the drawings.

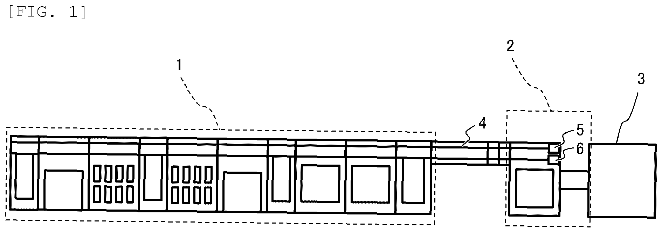

FIG. 1 is a top view showing a configuration of a sample inspection system according to an embodiment of the invention. As shown in FIG. 1, the sample inspection system according to the present embodiment includes a pretreatment device 1, a sample conveying device 2, an analyzer 3, and a conveyance line 4. The pretreatment device 1 performs pretreatment on a sample before an analysis process in the analyzer 3. Specifically, after a sample container accommodating a sample is loaded by an operator, processes such as centrifugation, plug opening, and dispensing are performed according to a request item. The pretreatment device 1 and the sample conveying device 2 include the conveyance line 4, and the sample subjected to the pretreatment is conveyed to the sample conveying device 2 by the conveyance line 4 together with a sample holder that supports the sample container.

The sample conveying device 2 transfers the sample holder conveyed from the pretreatment device 1 to the different conveyance line 4 and conveys the sample holder to the analyzer 3, and includes a sample holder lifting mechanism 5 and a sample holder lowering mechanism 6 as a sample lifting and lowering mechanism. In addition, as described later, the sample conveying device 2 includes a first conveyance line and a second conveyance line provided above or below the first conveyance line. For example, the sample conveying device 2 lifts and lowers the carried-in sample holder from the first conveyance line by the sample lifting and lowering mechanism, and then carries out the sample holder from the second conveyance line to the analyzer 3. The analyzer 3 analyzes the sample in the sample container supported by the conveyed sample holder.

Hereinafter, a case where the sample lifting and lowering mechanism is the sample holder lifting mechanism 5 will be described in Embodiment 1, and a case where the sample lifting and lowering mechanism is the sample holder lowering mechanism 6 will be described in Embodiment 2. Here, in the case of Embodiment 1, the first conveyance line is a lower conveyance line 4a provided below, and the second conveyance line is an upper conveyance line 4b provided above. On the other hand, in the case of Embodiment 2, the first conveyance line is the upper conveyance line 4b provided above, and the second conveyance line is the lower conveyance line 4a provided below. The sample holder lifting mechanism 5 and the sample holder lowering mechanism 6 may be mounted not only on the sample conveying device 2 but also on other modules such as the pretreatment device 1.

### Embodiment 1

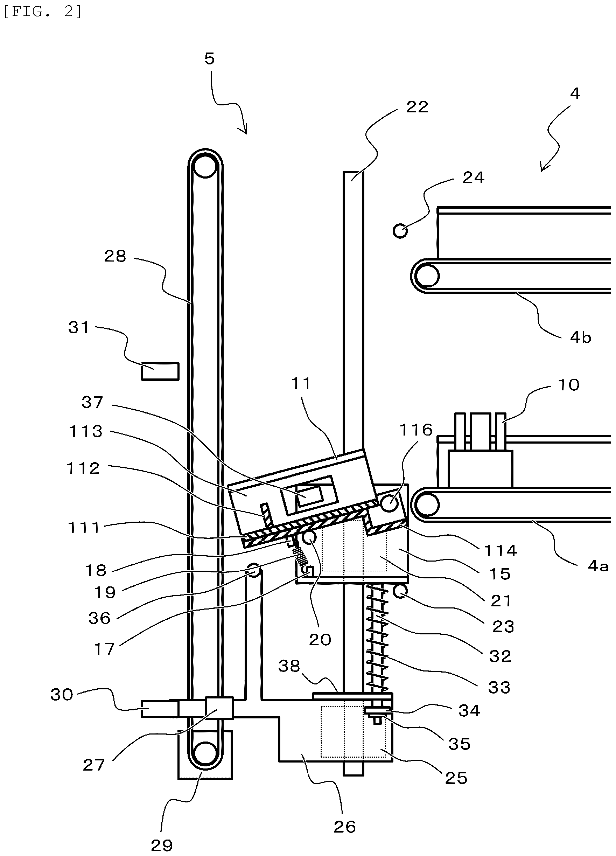

Embodiment 1 relates to the sample conveying device including the sample holder lifting mechanism 5, and will be described below with reference to FIGS. 2 to 10.

As shown in FIGS. 2 to 10, the sample conveying device 2 according to the present embodiment includes the lower conveyance line 4a (first conveyance line), the upper conveyance line 4b (second conveyance line), and the sample holder lifting mechanism 5. The lower conveyance line 4a conveys a sample holder 10 in a direction (leftward in the drawings) approaching the sample holder lifting mechanism 5, and carries in the sample holder 10 to the sample holder lifting mechanism 5 at an end portion of the lower conveyance line 4a. On the other hand, the upper conveyance line 4b carries out the sample holder 10 from the sample holder lifting mechanism 5 at an end portion of the upper conveyance line 4b, and conveys the sample holder 10 in a direction (rightward in the drawings) away from the sample holder lifting mechanism 5.

Next, a configuration of the sample holder lifting mechanism 5 will be described. The sample holder lifting mechanism 5 is a delivery mechanism of the sample holder 10 that is provided adjacent to each conveyance line, that lifts the carried-in sample holder 10 from the lower conveyance line 4a, and that carries out the sample holder 10 to the upper conveyance line 4b. The sample holder lifting mechanism 5 includes a sample holder loading unit 11, a following base 15, a power supply unit, a lifting and lowering rail 22, a drive base 26, a lifting and lowering spring 33 (first elastic body), a lower stopper 23, an upper stopper 24, an initial position detection sensor 30, and a carry-out position detection sensor 31.

First, the sample holder loading unit 11 includes a loading surface 111, a holder stopper 112, a loading guide 113, a loading base 114, a rotary spring first attachment portion 18, and a holder detection sensor 37. The loading surface 111 is a surface on which the sample holder 10 is loaded. The holder stopper 112 is a stopper that prevents the sample holder 10 from falling and tipping over in a radial direction of a rotation trajectory of the sample holder 10. The loading guide 113 is a guide that prevents the sample holder 10 from falling and tipping over in an axial direction of the rotation trajectory of the sample holder 10. The loading base 114 is a base that supports the loading surface 111 from below. The rotary spring first attachment portion 18 is a member for attaching one end of a rotary spring 19 to the loading base 114. The holder detection sensor 37 is a sensor that detects presence or absence of the sample holder 10 on the sample holder loading unit 11.

The sample holder loading unit 11 having the configuration as described above is coupled to the following base 15 by a rotary shaft 116 in a horizontal direction, and is rotatable around the rotary shaft 116. The sample holder loading unit 11 is inclined so as to rise toward the lower conveyance line 4a, so that the sample holder 10 can be received from the lower conveyance line 4a when the sample holder 10 is carried in. Accordingly, the sample holder 10 is less likely to fall even during the lifting of the sample holder loading unit 11.

The following base 15 includes a following block 21, a support pole 32, a rotary spring second attachment portion 17, and a rotary stopper 20. The following block 21 is a block for connecting the following base 15 to the lifting and lowering rail 22 to be described later and guiding lifting and lowering operations of the following base 15. The support pole 32 extends downward and penetrates a support pole guide 38 of a drive block 25 to be described later. The rotary spring second attachment portion 17 is a member for attaching the other end of the rotary spring 19 to the following block 21. The rotary spring 19 (second elastic body) applies a force for rotating the sample holder loading unit 11 counterclockwise in the drawings by connecting the rotary spring first attachment portion 18 and the rotary spring second attachment portion 17. The rotary stopper 20 is a stopper for limiting a rotation range of the sample holder loading unit 11. Except when the sample holder 10 is carried out, a lower surface of the loading base 114 is in contact with the rotary stopper 20, and the sample holder loading unit 11 is maintained in an inclined state.

The power supply unit includes a lifting and lowering motor 29 as a drive source and a lifting and lowering belt 28 as a movable body that extends vertically and that lifts and lowers by the lifting and lowering motor 29.

The lifting and lowering rail 22 is a rail extending vertically in parallel with the lifting and lowering belt 28, and is connected to the above-described following block 21 and the drive block 25 to be described later.

The drive base 26 includes the drive block 25, a belt holding tool 27, the support pole guide 38, a bush 34, a retaining ring 35, and a contactor 36. The drive block 25 is a block for connecting the drive base 26 to the lifting and lowering rail 22 and guiding lifting and lowering operations of the drive base 26. The belt holding tool 27 fixes the drive base 26 to the lifting and lowering belt 28. Accordingly, the drive base 26 can lift and lower integrally with the lifting and lowering belt 28 while being guided by the lifting and lowering rail 22. The support pole guide 38 extends toward a front of each drawing, and has a through hole (not shown) formed therein. The through hole has a size that allows the support pole 32 to pass therethrough but does not allow the lifting and lowering spring 33 to be described later to pass therethrough. The bush 34 is fixed to a predetermined position in a vicinity of a lower end of the support pole 32, and has a shape larger than that of the through hole. Therefore, when a distance from the drive base 26 to the following base 15 reaches a predetermined distance, an upper surface of the bush 34 is in contact with a lower surface of the support pole guide 38, and the distance is restricted from exceeding the predetermined distance. The retaining ring 35 serves to fix the bush 34 to the support pole 32. The contactor 36 is a portion that extends upward from the drive base 26 and that comes into contact with the lower surface of the loading base 114 of the sample holder loading unit 11.

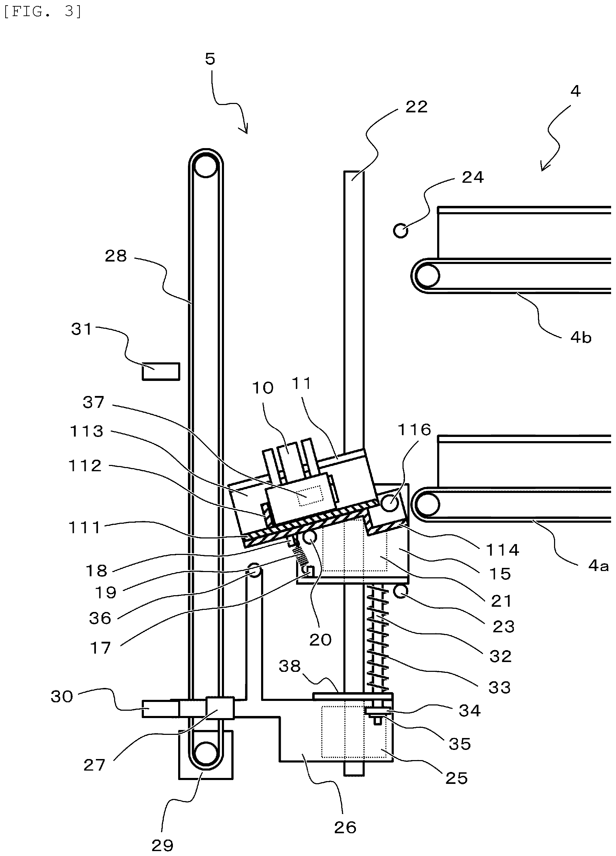

The lifting and lowering spring 33 is provided between an upper surface of the support pole guide 38 and a lower surface of the following base 15 so as to be inserted in an upper-lower direction with respect to an outer diameter side of the support pole 32, and connects the drive base 26 and the following base 15. In a state (state shown in FIGS. 2 and 3) where the drive base 26 is at an initial position, the lifting and lowering spring 33 has a free length and does not generate an elastic force for pushing up the following base 15, and the lower surface of the following base 15 comes into contact with the lower stopper 23 to be described later, so that a load of the following base 15 is supported by the lower stopper 23.

The lower stopper 23 (carry-in stopper) is a stopper that is provided at a predetermined height and restricts the lifting and lowering of the following base 15 when the sample holder 10 is carried in.

The upper stopper 24 (carry-out stopper) is a stopper that is provided at a predetermined height above the lower stopper 23 and restricts the lifting and lowering of the following base 15 when the sample holder 10 is carried out.

The initial position detection sensor 30 is a sensor for detecting that the drive base 26 is at the initial position, that is, the drive base 26 is at a lowest position as shown in FIGS. 2 and 3, and that the drive base 26 is in a state where the carrying-in of the sample holder 10 can be started.

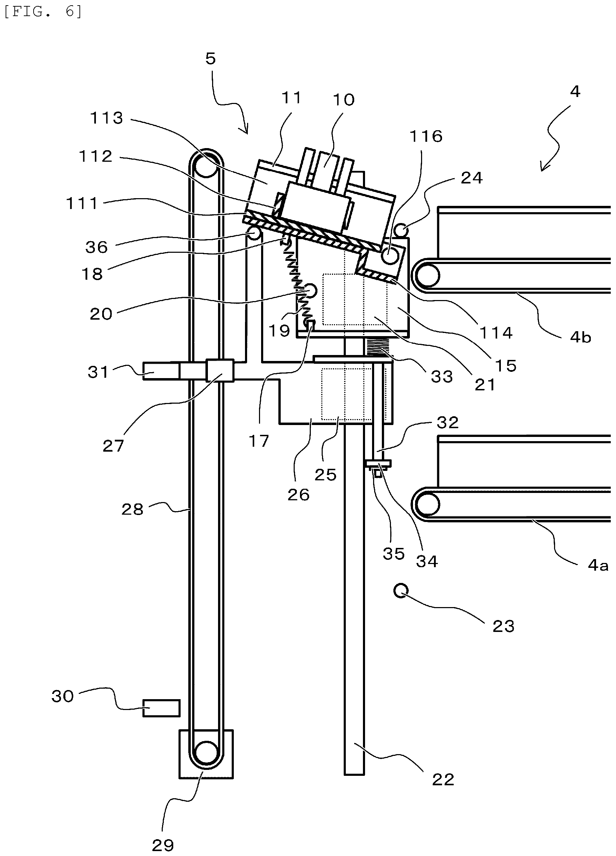

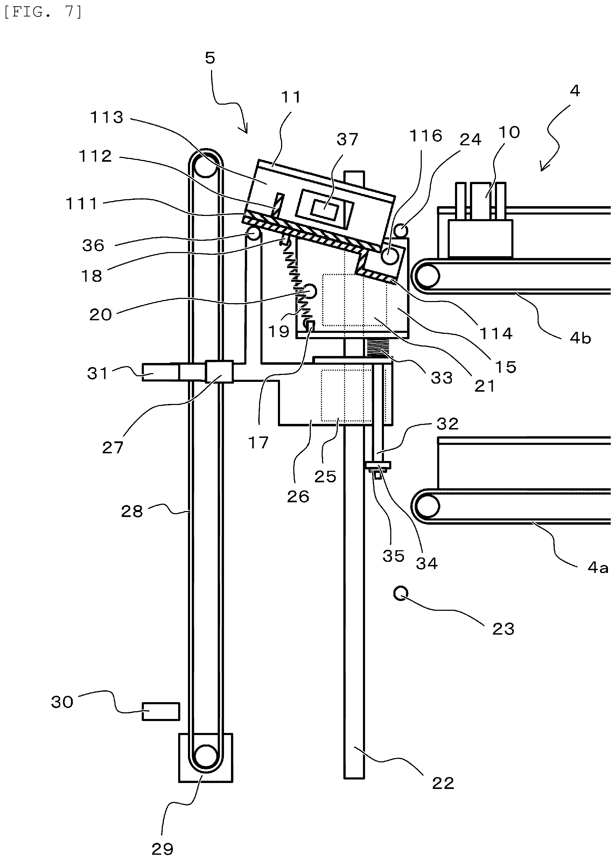

The carry-out position detection sensor 31 is a sensor for detecting that the drive base 26 is at a carry-out position, that is, the drive base 26 is at a highest position as shown in FIGS. 6 and 7, and that the drive base 26 is in a state where the carrying-out of the sample holder 10 can be completed.

Next, operations of the sample holder lifting mechanism 5 will be described. FIGS. 2 to 6 show a process in which the drive base 26 lifts after the sample holder loading unit 11 loads the sample holder 10, and FIGS. 7 to 10 show a process in which the drive base 26 lowers in a state where the sample holder loading unit 11 is empty.

FIG. 2 is a side view showing a state before the sample holder 10 is carried in in a sample conveying device according to Embodiment 1. At this time, the drive base 26 is at the initial position, and thus the initial position detection sensor 30 is turned on. Since the sample holder 10 is not yet carried in to the sample holder loading unit 11, the holder detection sensor 37 is turned off. The carry-out position detection sensor 31 is turned off.

FIG. 3 is a side view showing a state immediately after the sample holder 10 is carried in in the sample conveying device according to Embodiment 1. When the sample holder 10 conveyed by the lower conveyance line 4a is placed on the rotary shaft 116 and the loading surface 111, the sample holder 10 slides on the loading surface 111 leftward in the drawing due to an inclination of the sample holder loading unit 11. The sliding sample holder 10 comes into contact with the holder stopper 112 and stops. At this time, the holder detection sensor 37 is turned on.

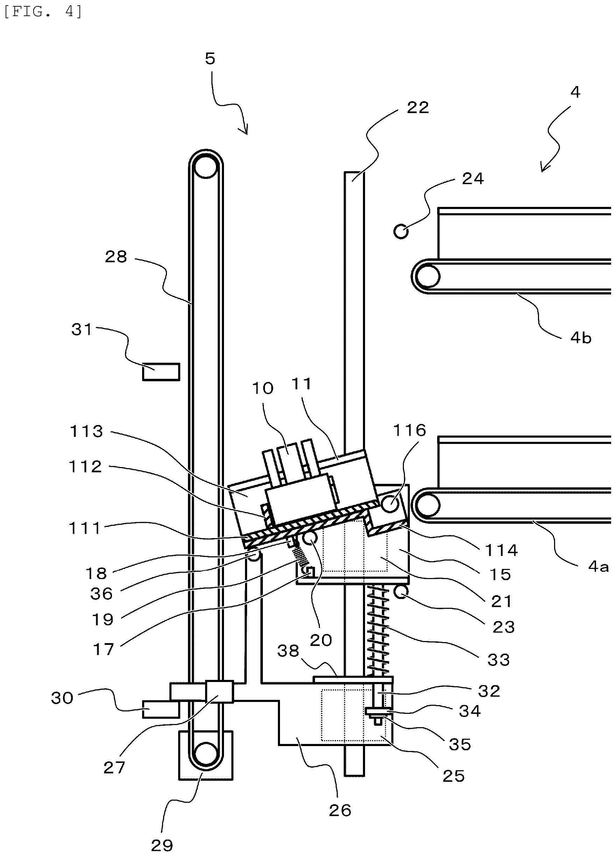

FIG. 4 is a side view showing a state immediately after the drive base 26 lifts and the contactor 36 is in contact with the loading base 114 in the sample conveying device according to Embodiment 1. When the lifting and lowering motor 29 rotates counterclockwise from the state shown in FIG. 3, the drive base 26 is lifted together with the lifting and lowering belt 28. At this time, the initial position detection sensor 30 is turned off. When the drive base 26 lifts, a relative distance between the drive base 26 and the following base 15 decreases, and thus the lifting and lowering spring 33 contracts and the contactor 36 comes into contact with the lower surface of the loading base 114.

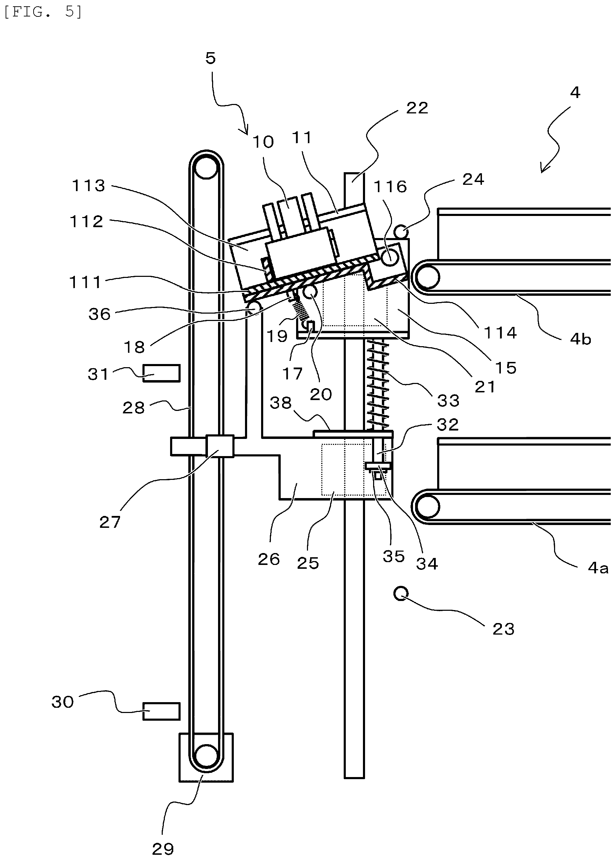

FIG. 5 is a side view showing a state immediately after the drive base 26 further lifts and the following base 15 is in contact with the upper stopper 24 in the sample conveying device according to Embodiment 1. When the lifting and lowering motor 29 further rotates counterclockwise from the state shown in FIG. 4, the drive base 26 further lifts together with the lifting and lowering belt 28. At this time, the loading base 114 is pushed up by the contactor 36 while the following base 15 is pushed up by the elastic force of the lifting and lowering spring 33, so that the sample holder loading unit 11 also lifts. Since the elastic force of the lifting and lowering spring 33 is set to be smaller than an elastic force of the rotary spring 19, the sample holder loading unit 11 is less likely to rotate during a lifting operation of the following base 15, so that the inclined state is maintained. When the following base 15 lifts and is in contact with the upper stopper 24 at a predetermined height, the following base 15 is stopped by being restricted from further lifting, and enters the state shown in FIG. 5.

FIG. 6 is a side view showing a state immediately after the drive base 26 further lifts and reaches the carry-out position in the sample conveying device according to Embodiment 1. When the lifting and lowering motor 29 further rotates counterclockwise from the state shown in FIG. 5, the drive base 26 further lifts together with the lifting and lowering belt 28. In this manner, even when the drive base 26 further lifts after the following base 15 is in contact with the upper stopper 24, the pushing-up performed by the contactor 36 of the loading base 114 is continued. Then, as shown in FIG. 6, the lifting and lowering spring 33 contracts as the drive base 26 lifts while the heights of the following base 15 and the rotary shaft 116 remain unchanged, and the rotary spring 19 expands, so that the sample holder loading unit 11 rotates clockwise around the rotary shaft 116. At this time, the carry-out position detection sensor 31 is turned on.

FIG. 7 is a side view showing a state immediately after the sample holder 10 is carried out in the sample conveying device according to Embodiment 1. When the sample holder loading unit 11 rotates and enters an inclined state of descending toward the upper conveyance line 4b, the sample holder 10 slides on the loading surface 111 rightward in the drawing and is carried out to the upper conveyance line 4b as shown in FIG. 7. At this time, the holder detection sensor 37 is turned off.

When the carrying-out of the sample holder 10 is completed, the sample holder lifting mechanism 5 causes the lifting and lowering motor 29 to rotate clockwise to lower the drive base 26 together with the lifting and lowering belt 28 in order to carry in the next sample holder 10.

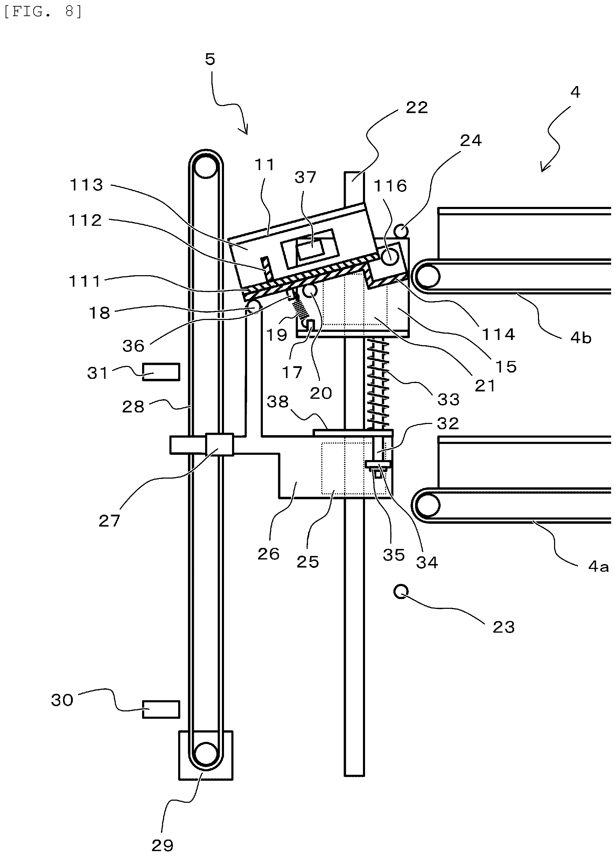

FIG. 8 is a side view showing a state immediately before the drive base 26 lowers and the following base 15 is separated from the upper stopper 24 in the sample conveying device according to Embodiment 1. When the drive base 26 starts to lower from the state shown in FIG. 7, the carry-out position detection sensor 31 is turned off. Further, as the drive base 26 lowers, the lifting and lowering spring 33 gradually returns from the contracted state, while the rotary spring 19 gradually returns from the expanded state, and thus the heights of the following base 15 and the rotary shaft 116 are maintained.

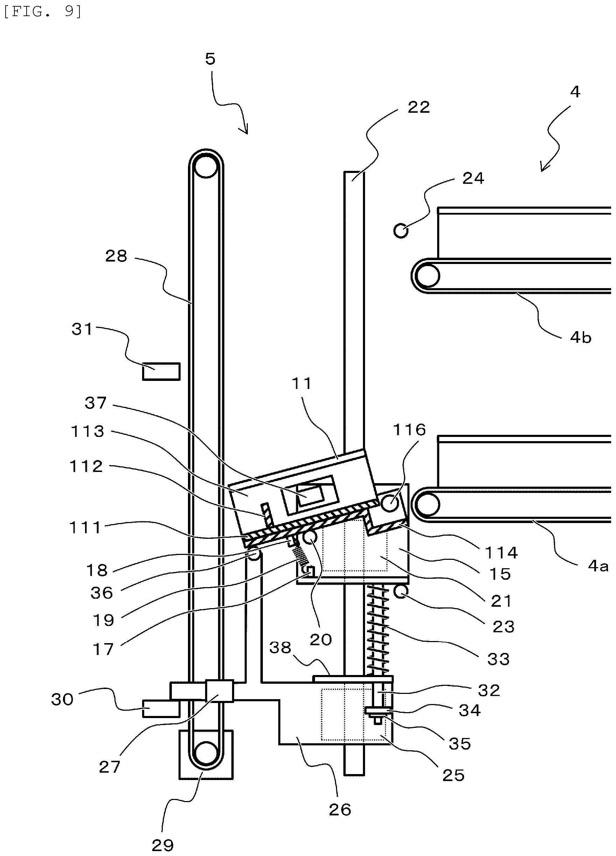

FIG. 9 is a side view showing a state immediately after the drive base 26 further lowers and the following base 15 is in contact with the lower stopper 23 in the sample conveying device according to Embodiment 1. When the drive base 26 further lowers from the state shown in FIG. 8, the following base 15 and the rotary shaft 116 also lower. When the following base 15 lowers and is in contact with the lower stopper 23 at the predetermined height, the following base 15 is stopped by being restricted from further lowering, and enters the state shown in FIG. 9.

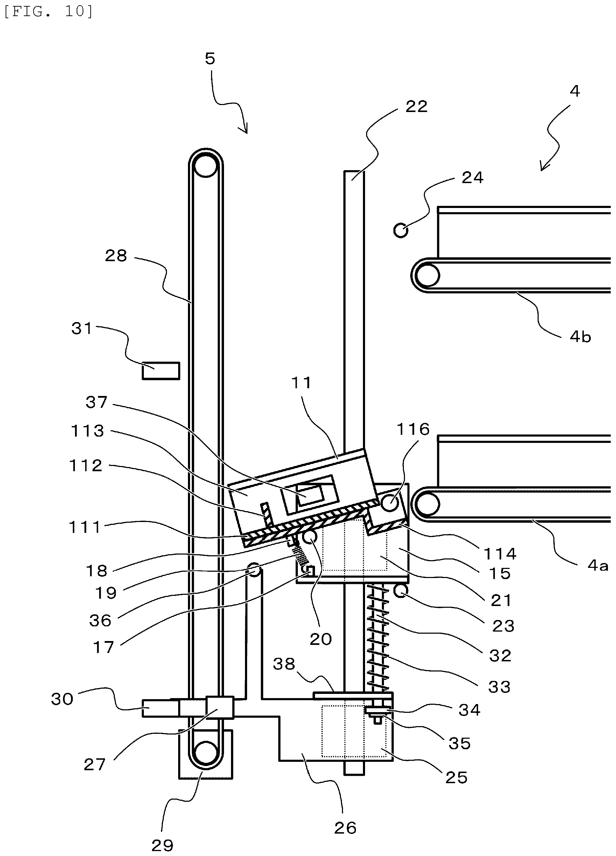

FIG. 10 is a side view showing a state where the drive base 26 further lowers and reaches the initial position in the sample conveying device according to Embodiment 1. When the drive base 26 further lowers from the state shown in FIG. 9, the relative distance between the drive base 26 and the following base 15 increases, and thus the contactor 36 is separated from the loading base 114 and the lifting and lowering spring 33 is expanded. Finally, as shown in FIG. 10, the drive base 26 returns to the initial position, and the initial position detection sensor 30 is turned on.

As described above, in the sample holder lifting mechanism 5 according to the present embodiment, when the drive base 26 lifts integrally with the rotation of the lifting and lowering motor 29, the following base 15 supporting the sample holder loading unit 11 lifts in conjunction with the drive base 26. After an operation of lifting the rotary shaft 116 together with the following base 15 is completed, an operation of rotating the sample holder loading unit 11 around the rotary shaft 116 is started. Accordingly, when the sample holder 10 is carried out by the rotation of the sample holder loading unit 11, a positional deviation between a start end of the upper conveyance line 4b which is a carry-out destination and an upper conveyance line 4b side end of the loading surface 111 on the sample holder loading unit 11 is reduced. As a result, it is possible to prevent the sample holder 10 from tipping over during the carrying-out. In particular, since the rotary shaft 116 is at an end portion on the loading surface 111 (on the upper conveyance line 4b side), a gap between the loading surface 111 and the upper conveyance line 4b during the carrying-out is further reduced. Accordingly, the sample holder 10 can pass from the loading surface 111 over the rotary shaft 116 while sliding and smoothly reach the upper conveyance line 4b.

### Embodiment 2

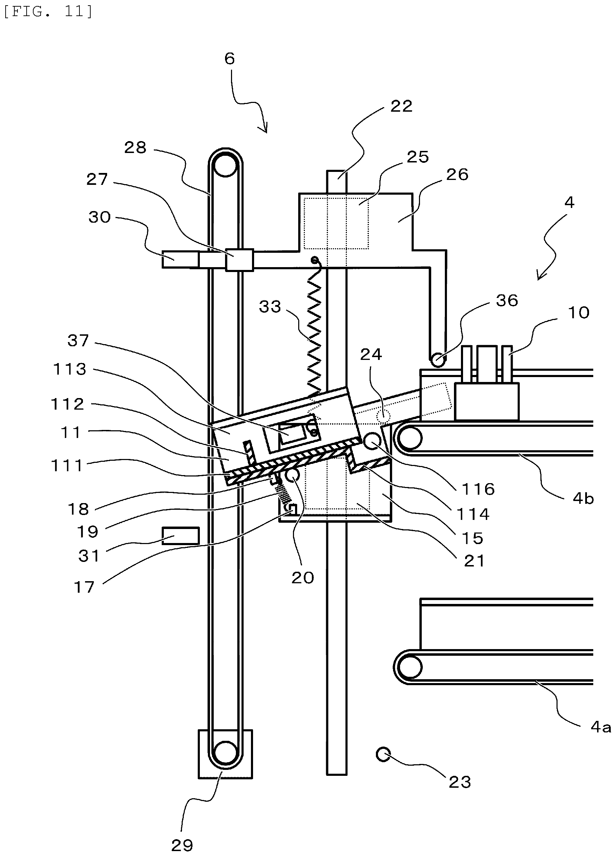

Embodiment 2 relates to the sample conveying device including the sample holder lowering mechanism 6, and will be described below with reference to FIGS. 11 to 19.

As shown in FIGS. 11 to 19, the sample conveying device 2 according to the present embodiment includes the upper conveyance line 4b (first conveyance line), the lower conveyance line 4a (second conveyance line), and the sample holder lowering mechanism 6. The upper conveyance line 4b conveys the sample holder 10 in a direction (leftward in the drawings) approaching the sample holder lowering mechanism 6, and carries in the sample holder 10 to the sample holder lowering mechanism 6 at the end portion of the upper conveyance line 4b. On the other hand, the lower conveyance line 4a carries out the sample holder 10 from the sample holder lowering mechanism 6 at the end portion of the lower conveyance line 4a, and conveys the sample holder 10 in a direction (rightward in the drawings) away from the sample holder lowering mechanism 6.

Next, a configuration of the sample holder lowering mechanism 6 will be described. The sample holder lowering mechanism 6 is a delivery mechanism of the sample holder 10 that is provided adjacent to each conveyance line, that lowers the carried-in sample holder 10 from the upper conveyance line 4b, and that carries out the sample holder 10 to the lower conveyance line 4a. Similarly to the sample holder lifting mechanism 5 according to Embodiment 1, the sample holder lowering mechanism 6 includes the sample holder loading unit 11, the following base 15, the power supply unit, the lifting and lowering rail 22, the drive base 26, the lifting and lowering spring 33 (first elastic body), the lower stopper 23, the upper stopper 24, the initial position detection sensor 30, and the carry-out position detection sensor 31. The configuration of the sample holder lowering mechanism 6 is basically the same as that of the sample holder lifting mechanism 5 according to Embodiment 1, and thus only different points will be described here.

In the present embodiment, the upper stopper 24 serves as a carry-in stopper, and the lower stopper 23 serves as a carry-out stopper. In the present embodiment, the initial position detection sensor 30 is located above the carry-out position detection sensor 31. Further, the contactor 36 according to the present embodiment extends downward from the drive base 26 and is brought into contact with an upper surface of a portion extending from the sample holder loading unit 11 rightward in the drawings. In the present embodiment, a tension spring is used as the lifting and lowering spring 33. The support pole 32, the support pole guide 38, the bush 34, and the retaining ring 35 that are provided in the sample holder lifting mechanism 5 according to Embodiment 1 are not provided in the sample holder lowering mechanism 6 according to the present embodiment.

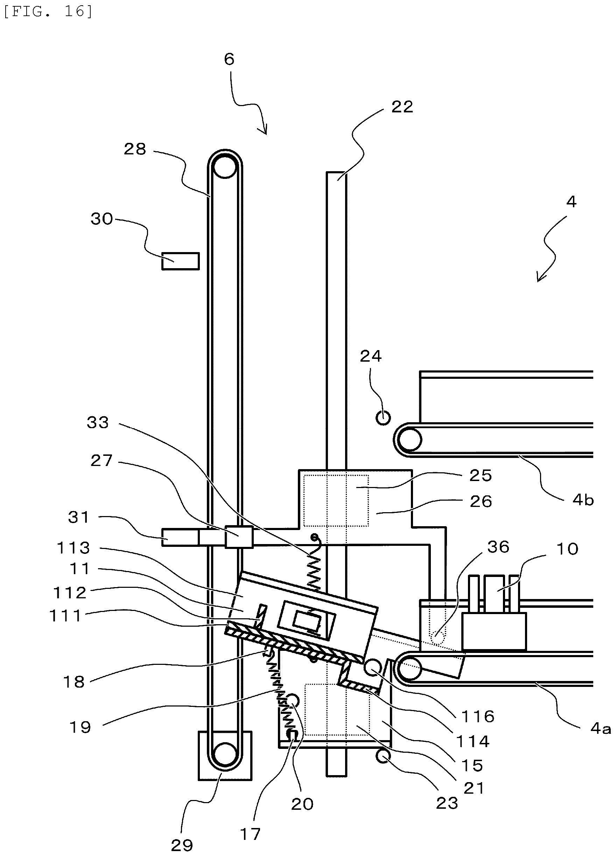

Next, operations of the sample holder lowering mechanism 6 will be described. FIGS. 11 to 15 show a process in which the drive base 26 lowers after the sample holder loading unit 11 loads the sample holder 10, and FIGS. 16 to 19 show a process in which the drive base 26 lifts in the state where the sample holder loading unit 11 is empty.

FIG. 11 is a side view showing a state before the sample holder 10 is carried in in the sample conveying device according to Embodiment 2. At this time, the drive base 26 is at the initial position, and thus the initial position detection sensor 30 is turned on. Since the sample holder 10 is not yet carried in to the sample holder loading unit 11, the holder detection sensor 37 is turned off. The carry-out position detection sensor 31 is turned off.

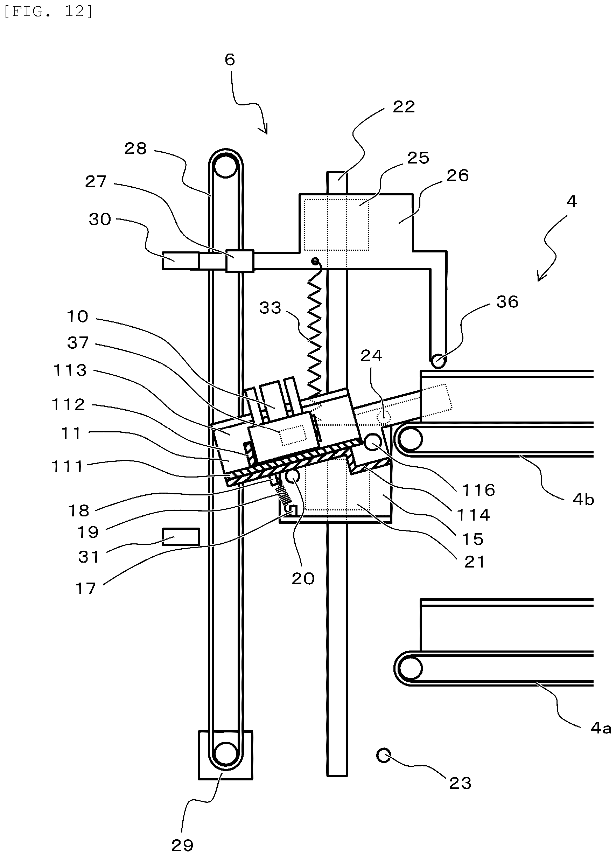

FIG. 12 is a side view showing a state immediately after the sample holder 10 is carried in in the sample conveying device according to Embodiment 2. When the sample holder 10 conveyed by the upper conveyance line 4b is placed on the rotary shaft 116 and the loading surface 111, the sample holder 10 slides on the loading surface 111 leftward in the drawing due to an inclination of the sample holder loading unit 11. The sliding sample holder 10 comes into contact with the holder stopper 112 and stops. At this time, the holder detection sensor 37 is turned on.

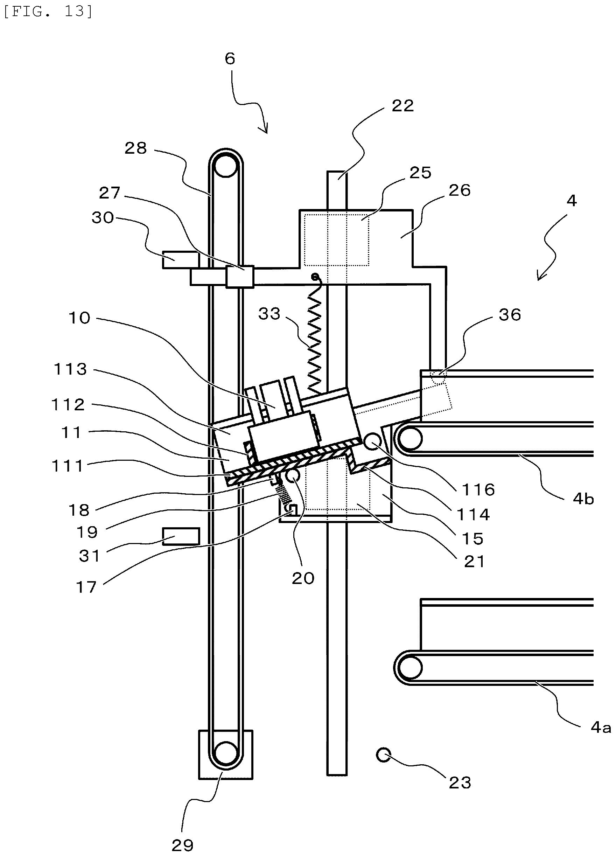

FIG. 13 is a side view showing a state immediately after the drive base 26 lowers and the contactor 36 is in contact with the sample holder loading unit 11 in the sample conveying device according to Embodiment 2. When the lifting and lowering motor 29 rotates clockwise from the state shown in FIG. 12, the drive base 26 lowers together with the lifting and lowering belt 28. At this time, the initial position detection sensor 30 is turned off. When the drive base 26 lowers, the relative distance between the drive base 26 and the following base 15 decreases, and thus the lifting and lowering spring 33 contracts and the contactor 36 comes into contact with the upper surface of the sample holder loading unit 11.

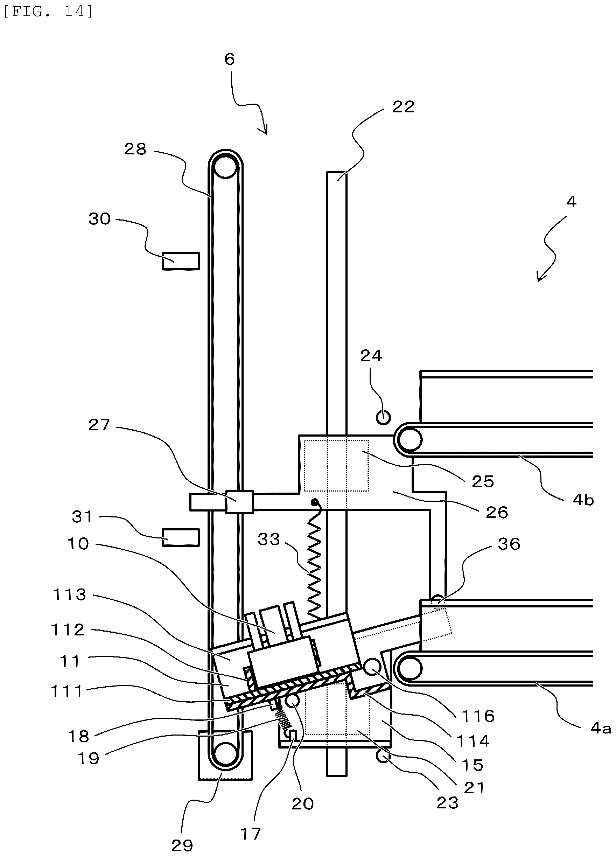

FIG. 14 is a side view showing a state immediately after the drive base 26 further lowers and the following base 15 is in contact with the lower stopper 23 in the sample conveying device according to Embodiment 2. When the lifting and lowering motor 29 further rotates clockwise from the state shown in FIG. 13, the drive base 26 further lowers together with the lifting and lowering belt 28. At this time, the loading base 114 is pushed down by the contactor 36 while the following base 15 is pushed down by the elastic force of the lifting and lowering spring 33, and thus the sample holder loading unit 11 also lowers. Since the elastic force of the lifting and lowering spring 33 is set to be smaller than the elastic force of the rotary spring 19, the sample holder loading unit 11 is less likely to rotate during the lowering operation of the following base 15, and the inclined state is maintained. When the following base 15 lowers and is in contact with the lower stopper 23 at the predetermined height, the following base 15 is stopped by being restricted from further lowering, and enters the state shown in FIG. 14.

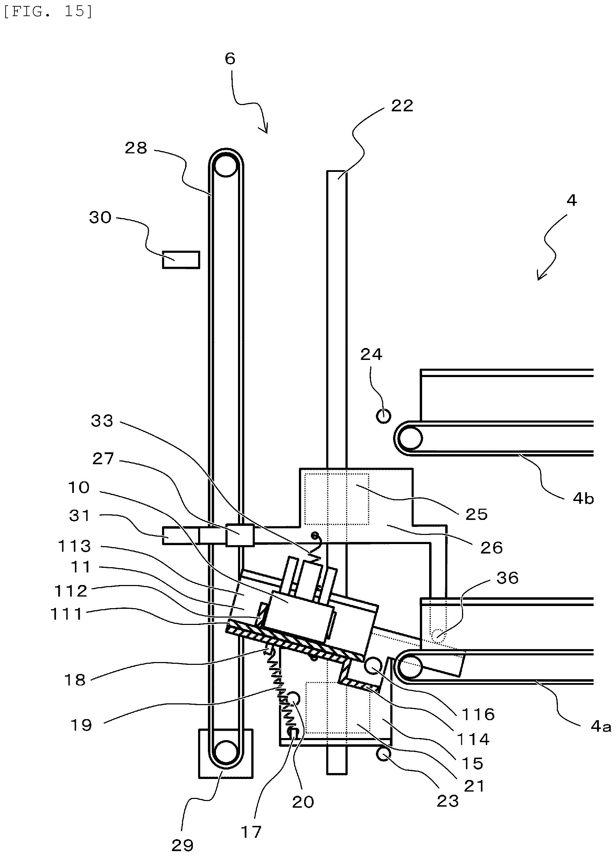

FIG. 15 is a side view showing a state immediately after the drive base 26 further lowers and reaches the carry-out position in the sample conveying device according to Embodiment 2. When the lifting and lowering motor 29 further rotates clockwise from the state shown in FIG. 14, the drive base 26 further lowers together with the lifting and lowering belt 28.

In this manner, even when the drive base 26 further lowers after the following base 15 is in contact with the lower stopper 23, the pushing-down performed by the contactor 36 of the sample holder loading unit 11 is continued. Then, as shown in FIG. 15, the lifting and lowering spring 33 contracts as the drive base 26 lowers while the heights of the following base 15 and the rotary shaft 116 remain unchanged, and the rotary spring 19 expands, so that the sample holder loading unit 11 rotates clockwise around the rotary shaft 116. At this time, the carry-out position detection sensor 31 is turned on.

FIG. 16 is a side view showing a state immediately after the sample holder 10 is carried out in the sample conveying device according to Embodiment 2. When the sample holder loading unit 11 rotates and enters an inclined state of descending toward the lower conveyance line 4a, the sample holder 10 slides on the loading surface 111 rightward in the drawing and is carried out to the lower conveyance line 4a as shown in FIG. 16. At this time, the holder detection sensor 37 is turned off.

When the carrying-out of the sample holder 10 is completed, the sample holder lowering mechanism 6 causes the lifting and lowering motor 29 to rotate counterclockwise to lift the drive base 26 together with the lifting and lowering belt 28 in order to carry in the next sample holder 10.

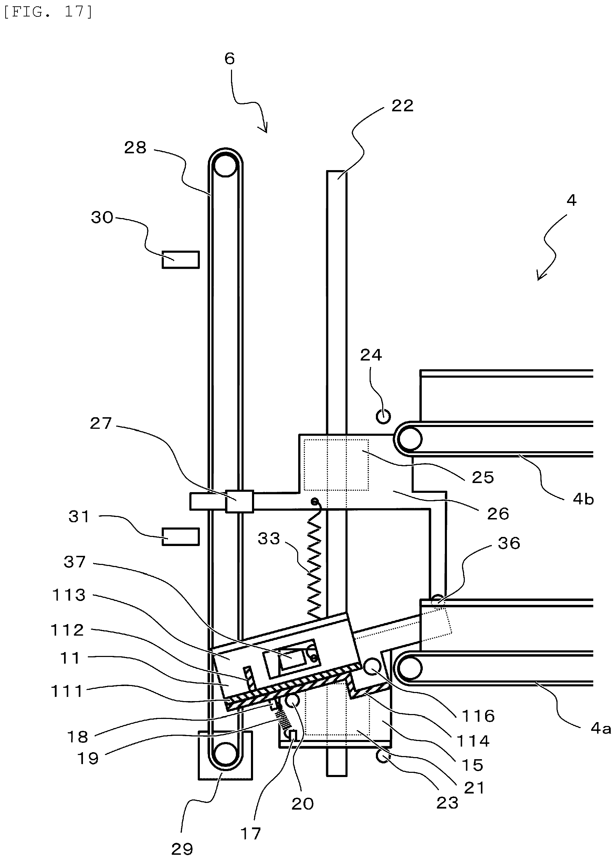

FIG. 17 is a side view showing a state immediately before the drive base 26 lifts and the following base 15 is separated from the lower stopper 23 in the sample conveying device according to Embodiment 2. When the drive base 26 starts to lift from the state shown in FIG. 16, the carry-out position detection sensor 31 is turned off. Further, as the drive base 26 lifts, the lifting and lowering spring 33 gradually returns from the contracted state, and the rotary spring 19 gradually returns from the expanded state, and thus the heights of the following base 15 and the rotary shaft 116 are maintained.

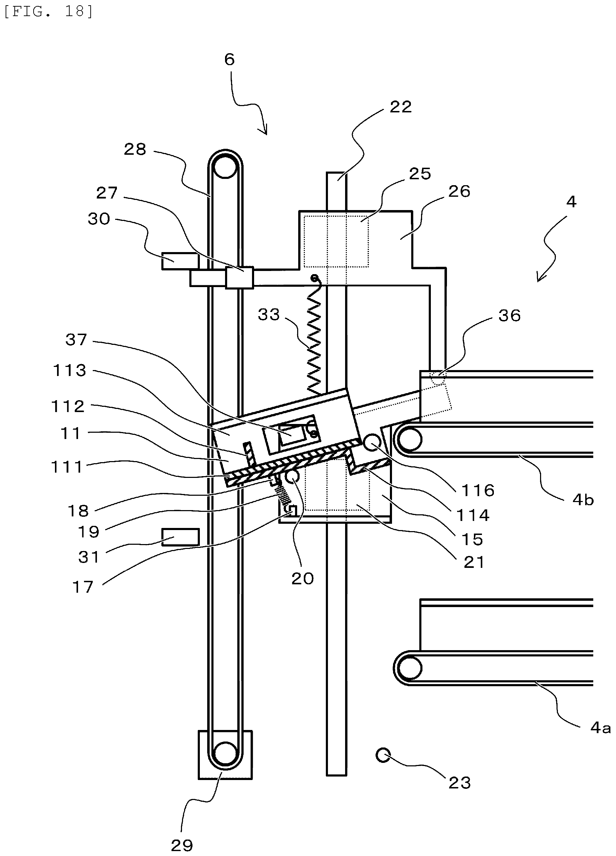

FIG. 18 is a side view showing a state immediately after the drive base 26 further lifts and the following base 15 is in contact with the upper stopper 24 in the sample conveying device according to Embodiment 2. When the drive base 26 further lifts from the state shown in FIG. 17, the following base 15 and the rotary shaft 116 also lift. When the following base 15 lifts and is in contact with the upper stopper 24 at the predetermined height, the following base 15 is stopped by being restricted from further lifting, and enters the state shown in FIG. 18.

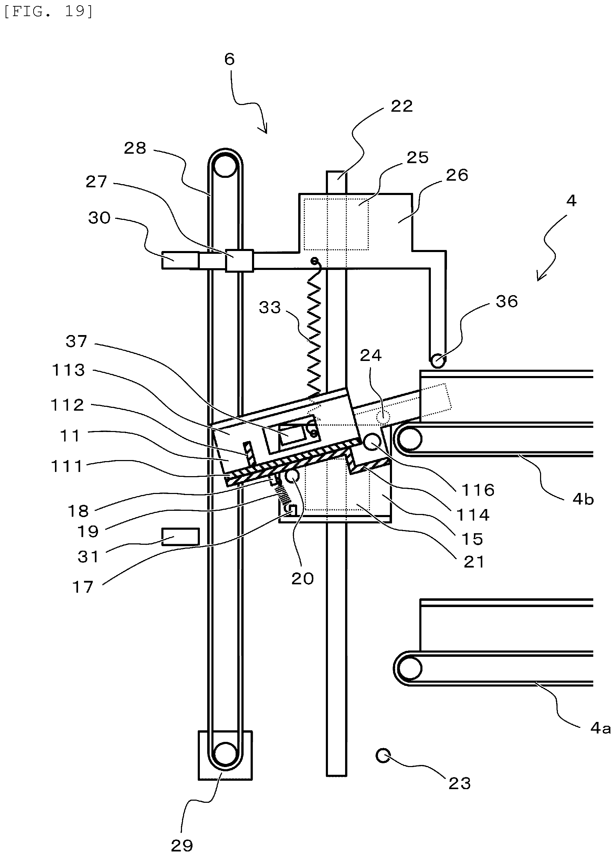

FIG. 19 is a side view showing a state where the drive base 26 further lifts to reach the initial position in the sample conveying device according to Embodiment 2. When the drive base 26 further lifts from the state shown in FIG. 18, the relative distance between the drive base 26 and the following base 15 increases, and thus the contactor 36 is separated from the sample holder loading unit 11 and the lifting and lowering spring 33 is expanded. Finally, as shown in FIG. 19, the drive base 26 returns to the initial position, and the initial position detection sensor 30 is turned on.

As described above, in the sample holder lowering mechanism 6 according to the present embodiment, when the drive base 26 lowers integrally with the rotation of the lifting and lowering motor 29, the following base 15 supporting the sample holder loading unit 11 lowers in conjunction with the drive base 26. After an operation of lowering the rotary shaft 116 together with the following base 15 is completed, the operation of rotating the sample holder loading unit 11 around the rotary shaft 116 is started. Accordingly, when the sample holder 10 is carried out by the rotation of the sample holder loading unit 11, a positional deviation between a start end of the lower conveyance line 4a which is the carry-out destination and a lower conveyance line 4a side end of the loading surface 111 on the sample holder loading unit 11 is reduced. As a result, it is possible to prevent the sample holder 10 from tipping over during the carrying-out. In particular, since the rotary shaft 116 is at an end portion on the loading surface 111 (on the lower conveyance line 4a side), a gap between the loading surface 111 and the lower conveyance line 4a during the carrying-out is further reduced. Accordingly, the sample holder 10 can pass from the loading surface 111 over the rotary shaft 116 while sliding, and smoothly reach the lower conveyance line 4a.

### Reference Signs List

- 1:: pretreatment device
- 2:: sample conveying device
- 3:: analyzer
- 4:: conveyance line
- 4a:: lower conveyance line
- 4b:: upper conveyance line
- 5:: sample holder lifting mechanism
- 6:: sample holder lowering mechanism
- 10:: sample holder
- 11:: sample holder loading unit
- 15:: following base
- 17:: rotary spring second attachment portion
- 18:: rotary spring first attachment portion
- 19:: rotary spring
- 20:: rotary stopper
- 21:: following block
- 22:: lifting and lowering rail
- 23:: lower stopper
- 24:: upper stopper
- 25:: drive block
- 26:: drive base
- 27:: belt holding tool
- 28:: lifting and lowering belt
- 29:: lifting and lowering motor
- 30:: initial position detection sensor
- 31:: carry-out position detection sensor
- 32:: support pole
- 33:: lifting and lowering spring
- 34:: bush
- 35:: retaining ring
- 36:: contactor
- 37:: holder detection sensor
- 38:: support pole guide
- 111:: loading surface
- 112:: holder stopper
- 113:: loading guide
- 114:: loading base
- 116:: rotary shaft

## Claims

1. A sample lifting and lowering mechanism comprising:
a sample holder loading unit configured to load a sample holder and to rotate around a rotary shaft, wherein
the sample lifting and lowering mechanism lifts, lowers, and carries out the carried-in sample holder to the sample holder loading unit, and
an operation in which the sample holder loading unit rotates around the rotary shaft is started after an operation in which the rotary shaft lifts or lowers is completed.

2. A sample lifting and lowering mechanism comprising:
a power supply unit configured to lift and lower a vertically extending movable body by a drive source;
a lifting and lowering rail vertically extending parallel to the movable body;
a drive base fixed to the movable body and configured to lift and lower integrally with the movable body while being guided by the lifting and lowering rail;
a following base configured to lift and lower while being guided by the lifting and lowering rail;
a first elastic body connecting the drive base and the following base;
a sample holder loading unit on which a sample holder is loaded;
a rotary shaft in a horizontal direction rotatably coupling the sample holder loading unit to the following base;
a contactor extending in an upper-lower direction from the drive base and configured to come into contact with the sample holder loading unit; and
a carry-out stopper provided at a predetermined height and configured to restrict lifting and lowering of the following base when the sample holder is carried out, wherein
when the drive base lifts and lowers,
the sample holder loading unit also lifts and lowers by the contactor pushing up or down the sample holder loading unit while the following base is pushed up or down by an elastic force of the first elastic body before the following base is in contact with the carry-out stopper, and
the sample holder loading unit rotates around the rotary shaft by the contactor continuing to push up or down the sample holder loading unit while the lifting and lowering of the following base is restricted by the carry-out stopper after the following base is in contact with the carry-out stopper.

3. The sample lifting and lowering mechanism according to claim 2, further comprising:
a second elastic body connecting the following base and the sample holder loading unit, wherein
after the following base is in contact with the carry-out stopper, the first elastic body contracts and the second elastic body expands as the drive base lifts and lowers.

4. The sample lifting and lowering mechanism according to claim 3, wherein
the first elastic body has an elastic force smaller than an elastic force of the second elastic body.

5. The sample lifting and lowering mechanism according to claim 2, further comprising:
a carry-in stopper provided at a predetermined height and configured to restrict the lifting and lowering of the following base when the sample holder is carried in, wherein
when the drive base lifts and lowers,
the contactor comes into contact with the sample holder loading unit before the following base comes into contact with the carry-in stopper, and
the contactor is separated from the sample holder loading unit after the following base comes into contact with the carry-in stopper.

6. The sample lifting and lowering mechanism according to claim 5, wherein
at an initial position of the drive base, the following base comes into contact with the carry-in stopper and the contactor is separated from the sample holder loading unit, and
at a carry-out position of the drive base, the following base comes into contact with the carry-out stopper and the first elastic body contracts.

7. The sample lifting and lowering mechanism according to claim 6, further comprising:
an initial position detection sensor configured to detect that the drive base is at the initial position; and
a carry-out position detection sensor configured to detect that the drive base is at the carry-out position.

8. A sample conveying device comprising:
a first conveyance line configured to convey a sample holder;
a second conveyance line provided above or below the first conveyance line and configured to convey the sample holder; and
a sample lifting and lowering mechanism configured to, when the sample holder conveyed by the first conveyance line is carried in, lift and lower the sample holder and carry out the sample holder to the second conveyance line, wherein
the sample lifting and lowering mechanism includes a sample holder loading unit configured to load the sample holder and to rotate around a rotary shaft, and starts an operation in which the sample holder loading unit rotates around the rotary shaft after an operation in which the rotary shaft lifts or lowers is completed.

9. A sample conveying device comprising:
a first conveyance line configured to convey a sample holder;
a second conveyance line provided above or below the first conveyance line and configured to convey the sample holder; and
a sample lifting and lowering mechanism configured to, when the sample holder conveyed by the first conveyance line is carried in, lift and lower the sample holder and carry out the sample holder to the second conveyance line, wherein
the sample lifting and lowering mechanism includes
a power supply unit configured to lift and lower a vertically extending movable body by a drive source;
a lifting and lowering rail vertically extending parallel to the movable body;
a drive base fixed to the movable body and configured to lift and lower integrally with the movable body while being guided by the lifting and lowering rail;
a following base configured to lift and lower while being guided by the lifting and lowering rail;
a first elastic body connecting the drive base and the following base;
a sample holder loading unit on which a sample holder is loaded;
a rotary shaft in a horizontal direction rotatably coupling the sample holder loading unit to the following base;
a contactor extending from the drive base in an upper-lower direction and configured to come into contact with the sample holder loading unit; and
a carry-out stopper provided at a predetermined height and configured to restrict lifting and lowering of the following base when the sample holder is carried out, and
when the drive base lifts and lowers,
the sample holder loading unit also lifts and lowers by the contactor pushing up or down the sample holder loading unit while the following base is pushed up or down by an elastic force of the first elastic body before the following base comes into contact with the carry-out stopper, and
the sample holder loading unit rotates around the rotary shaft by the contactor continuing to push up or down the sample holder loading unit while the lifting and lowering of the following base is restricted by the carry-out stopper after the following base comes into contact with the carry-out stopper.

10. The sample conveying device according to claim 8 or 9, wherein
when the sample holder is carried in to the sample holder loading unit from the first conveyance line, the sample holder loading unit is inclined to rise toward the first conveyance line, and
when the sample holder is carried out from the sample holder loading unit to the second conveyance line, the sample holder loading unit is inclined to fall toward the second conveyance line.

11. The sample conveying device according to claim 8 or 9, wherein
the rotary shaft is at a second conveyance line side end on a loading surface of the sample holder loading unit.

12. A sample analysis system comprising:
the sample conveying device according to claim 8 or 9; and
an analyzer configured to analyze a sample conveyed from the sample conveying device.
